# FASCICULE DE BREVET EUROPEEN

(11) **EP 2 078 581 B1**
(45) Date de publication et mention de la délivrance du brevet: **04.06.2014**
(21) Numéro de dépôt: 09150272.4
(22) Date de dépôt: 09.01.2009
(51) Int. Cl.: B23K 9/173

(54) **Procédé de soudage MAG d'un assemblage à bord soyé**
MAG-Schweißverfahren einer Montageanordnung mit durchgezogenem Rand
MAG welding method for an assembly with joggled edge

(30) Priorité: 11.01.2008 FR 0850171
(43) Date de publication de la demande: 15.07.2009
(73) Titulaire: L'Air Liquide Société Anonyme pour l'Etude et l'Exploitation des Procédés Georges Claude, 75007 Paris (FR)
(72) Inventeur: Saez, Michel, 60260 Lamorlaye (FR); Boudet, Gilles, 78570 Andresy (FR); Herduin, Christophe, 95300 Ennery (FR)
(74) Mandataire: Pittis, Olivier

(56) Documents cités:
- EP-A- 0 639 423
- EP-A- 1 321 218
- EP-A- 1 844 894
- DE-C1- 19 704 513

## Description

La présente invention concerne un procédé de soudage de tels appareils dont la virole est soudée à deux fonds venant fermer la virole à ses deux extrémités, selon une configuration dite en « bord soyé » tel que revendiqué dans la revendication 1.

La fabrication des appareils à pression est compliquée du fait des nombreuses contraintes normatives existantes pour ce type d'appareils. Les appareils à pression concernés dans le cadre de la présente demande sont ceux devant supporter une pression interne supérieure à 0,5 bar et dont la paroi est formée d'une plaque de tôle ayant une épaisseur inférieure à 5 mm.

A titre d'exemple, on peut les ballons d'eau chaude, les extincteurs, les compresseurs, les appareils réfrigérants, les bouteilles de GPL...

Ces appareils sont classifiés en fonction de leur type et de leur utilisation. On distingue ainsi deux catégories principales, à savoir les récipients à pression simples, tels les appareils destinés à contenir de l'azote ou de l'air comprimé, dont la construction dépend de la Directive 87 404 du 25 juin 1987, et les équipements sous pression destinés à contenir des fluides, notamment sous forme liquide, gaz, vapeur, liquide avec suspension solide... qui dépendant de la Directive 97/23 et du Décret 99 1046 du 13 décembre 1999, ainsi que les extincteurs portables et mobiles définis dans la norme EN 1866.

Les exigences relatives à la conception des assemblages soudés de ce type et des contrôles de soudage devant être opérés ressort clairement de ces normes.

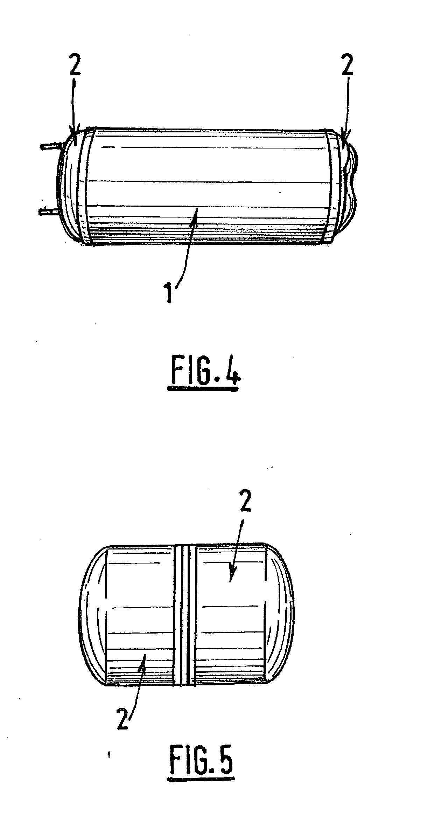

En particulier, lors de la conception de ces matériels, il faut procéder à l'assemblage d'une virole 1 et de deux fonds 2 venant se positionner aux deux extrémités de la virole 1, comme illustré en Figure 4, ou alors simplement de deux fonds 2 l'un avec l'autre, lesquels ont été préalablement conformés comme désiré, par exemple par emboutissage, comme montré en Figure 5.

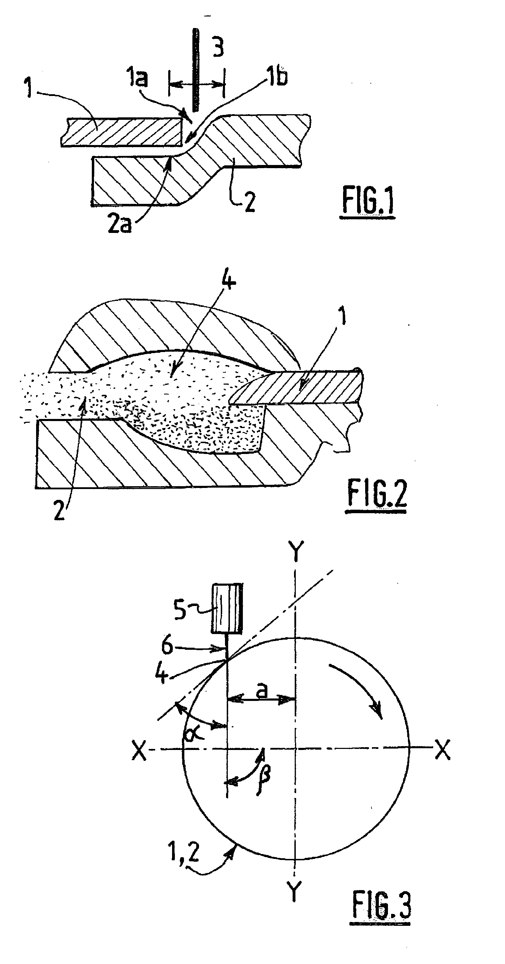

Dans les deux cas, la configuration de joint, pour le soudage des différentes parties entre elles, est de type « en bord soyé », et est schématisée en Figure 1.

En effet, comme on le voit, la virole 1 de la Figure 4 a généralement une forme cylindrique et les fonds 2 constituent des couvercles ou parties d'extrémités venant se raccorder aux deux extrémités du cylindre de virole en y pénétrant sur une petite distance. Dit autrement, dans une telle configuration de type bord soyé, la paroi périphérique du bord circulaire de chaque fond 2 est conformée sur quelques millimètres, typiquement de 1,2 mm à 4 mm environ, pour pouvoir pénétrer à l'intérieur de la virole 1 à laquelle le fond 2 considéré doit être soudé. La paroi de la virole 1 vient donc recouvrir le bord ainsi conformé de chaque fond 2 de virole. Un soudage circulaire de ces deux parties est alors opéré et du métal d'apport est apporté via un fil fusible 3 qui est progressivement fondu par un arc électrique. Il est à noter que l'épaisseur de tôle de la virole 1 peut être différente de l'épaisseur de la tôle destinée à constituer les fonds 2.

Par ailleurs, dans la configuration de la Figure 5, l'un des fonds 2 est conformé comme la virole 1 de la Figure 4, puis les deux fonds 2 sont soudés l'un à l'autre selon la configuration en bord soyé de la Figure 1, comme précédemment.

Or, les contraintes normatives imposent que la soudure ainsi obtenue présente un profil assez large pour bien recouvrir l'extérieur du joint et avoir une forme de pénétration suffisante pour fondre l'arête inférieure de la virole de la Figure 4 ou du fond configuré comme la virole pour l'assemblage de la Figure 5.

A l'inverse, il existe également des contraintes réglementaires quant aux défauts acceptables dans ce type de soudure.

Dans tous les cas, il est impératif d'obtenir une fusion complète du joint soudé sur bord soyé, c'est à dire à pleine pénétration.

Par ailleurs, on connaît le document EP-A-639423 qui propose l'utilisation de mélanges gazeux à base d'Argon et/ou d'Hélium et de O₂ ou de CO₂ pour le soudage à l'arc des matériaux non-ferreux, tel l'aluminium, de manière à éviter la formation de porosités et les instabilités d'arc.

Le procédé de soudage habituellement utilisé pour souder ce type d'assemblage est le procédé de soudage MAG (Metal Active Gas) à l'arc électrique avec fil plein d'apport et gaz de protection actif.

Toutefois, ce procédé ne permet pas d'obtenir une soudure répondant à la fois aux exigences des normes et qui soit de bonne qualité. A noter qu'un procédé MAG à régime pulsé permet, dans certains cas, de répondre aux contraintes de qualité requises par les normes mais cela se fait au détriment de la productivité du procédé, donc à sa compétitivité au plan industriel.

Par ailleurs, il a été aussi proposé de souder des bords soyés par un procédé de soudage bi-fils, c'est-à-dire mettant en oeuvre deux fils fusibles. Toutefois, ce type de procédé n'est pas idéal au plan industriel car plus onéreux et plus complexe à mettre en oeuvre car il nécessite l'utilisation de deux sources de courants de soudage et d'une torche particulière apte à entraîner deux fils, qu'il requiert davantage de puissance pour fondre les deux fils et qu'il engendre une consommation plus importante de fil donc une augmentation des coûts. Comme dans le cas précédent, tout cela se fait au détriment de la productivité et donc rend cette solution peu viable au plan industriel.

Au vu de cela, le problème qui se pose est de proposer un procédé de soudage des assemblages en bord soyé permettant d'obtenir une bonne qualité de soudure et un respect des normes, mais sans détérioration notable de la productivité du procédé, ainsi qu'un mélange gazeux adapté à ce procédé de soudage.

La solution de l'invention est alors un procédé de soudage MAG à l'arc électrique mettant en oeuvre un fil d'apport fusible et un gaz de protection, dans lequel :
a) on assemble au moins deux pièces métalliques l'une avec l'autre de manière à définir un joint à souder entre lesdites pièces métalliques,
b) on opère à l'aide de l'arc électrique, une fusion du métal constitutif desdites pièces le long du joint à souder et simultanément une fusion progressive du fil d'apport et le dépôt, au niveau du joint, du métal fondu issu de la fusion du fil de manière à obtenir, après refroidissement, un cordon de soudage,
c) durant l'étape b), on opère une protection gazeuse du joint de soudure au moyen d'un gaz de protection.

Selon le procédé de l'invention, à l'étape a), les pièces sont assemblées selon une configuration de type bord soyé, lesdites pièces étant en acier et ayant une épaisseur comprise entre 0,5 mm et 5 mm, et à l'étape b), le gaz de protection est constitué de 8 à 12 % d'hélium, de 2,5 à 3,5 % d'oxygène et d'argon pour le reste (% en volume).

Dans le cadre de la présente invention, par configuration ou assemblage en « bord soyé », on entend que les bords des pièces à souder sont conformés comme illustré sur la Figure 1 et expliqué ci-avant, c'est-à-dire que le bord (ou extrémité) d'une des pièces, notamment un fond 2, est mise en forme adéquate pour venir se positionner en dessous du bord de l'autre pièce, notamment un autre fond 2 (Fig. 5) ou une virole 1 (Fig. 4).

Il y a donc un recouvrement des deux bords sur quelques millimètres, généralement moins de 10 mm, typiquement de l'ordre de 1,2 mm à 4 mm environ. Lors du soudage subséquent, il s'opère une fusion des arrêtes supérieure 1a et inférieure 1b du bord non déformé, à savoir de la virole 1 dans le cas des Figures 1 et 4 (ou d'un des deux fonds dans le cas de la Figure 5), et une fusion d'au moins une partie de la paroi supérieure 2a de la pièce 2 à bord déformé, à savoir le fond 2 de virole par exemple dans le cas des Figures 1 et 4.

Selon le cas, le procédé de l'invention peut comprendre l'une ou plusieurs des caractéristiques suivantes :
- le mélange gazeux contient plus de 9% d'hélium, de préférence plus de 9,5% d'hélium.
- le mélange gazeux contient moins de 11% d'hélium, de préférence moins de 10,5% d'hélium.
- le mélange gazeux contient plus de 2,7% d'oxygène, de préférence plus de 2,8% d'oxygène.
- le mélange gazeux contient moins de 3,3% d'oxygène, de préférence moins de 3,2% d'oxygène.
- le mélange gazeux contient entre 2,9% et 3,1 % d'oxygène.
- le mélange gazeux est constitué de 10% d'hélium, 3% d'oxygène et de 87% d'argon.
- les bords des pièces formant la configuration de type bord soyé sont de forme circulaire.
- le fil d'apport fusible est un fil plein ayant un diamètre compris entre 0,8 et 1,2 mm, de préférence de l'ordre de 1 mm.
- les pièces sont en acier et ont une épaisseur typiquement de l'ordre de 1,5 mm à 3 mm. Par exemple, dans le cas du soudage d'une virole et de deux fonds (figure 4), la virole peut être formée d'une tôle d'environ 1,5 mm d'épaisseur et les fonds d'une tôle d'environ 2,7 mm (mesures faites au niveau du bord soyé). En outre, il est entendu par « acier », les aciers au carbone non et faiblement alliés, les aciers à Haute Limite Elastique (HLE) et les aciers alliés qui contiennent plus de 5% d'un (ou plusieurs) élément d'alliage.
- l'une des pièces est une virole et l'autre pièce est un fond de virole, le fond de virole venant s'insérer dans la virole en configuration de type bord soyé (Figure 4), en particulier la virole et le fond forment une partie d'un appareil sous pression.
- l'une des pièces est un premier fond et l'autre pièce est un second fond, le premier fond venant s'insérer dans le second fond en configuration de type bord soyé (Figure 5), en particulier les deux fonds forment une partie d'un appareil sous pression.
- l'assemblage soudé obtenu est un ballon d'eau chaude, un extincteur, un compresseur, un appareil réfrigérant ou une bouteille de gaz de type GPL (gaz propane liquide).
- le mélange gazeux ternaire est pré-conditionné dans un récipient de gaz sous pression, en particulier dans une bouteille ou bonbonne de gaz. Dans ce cas, le mélange gazeux ternaire acheminé sur le site de son utilisation est prêt à l'emploi.
- de manière alternative, le mélange gazeux ternaire peut être obtenu sur son site d'utilisation par mélange des différents constituants du mélange au moyen d'un mélangeur de gaz ou tout dispositif analogue. Dans ce cas, les constituants du mélange peuvent être acheminés sur site dans des récipients de gaz sous pression sous forme de gaz purs ou de pré-mélanges, voire produits sur le site même de leur utilisation à partir d'air ambiant, avant d'être mélangés ensemble dans les proportions souhaitées.
- le régime de courant de soudage est de type courant lisse.
- l'intensité du courant de soudage est comprise entre 250 et 350 A.
- la tension du courant de soudage est comprise entre 28 et 35 V.
- la vitesse de soudage est de l'ordre de 1 à 2 m/min.
- la vitesse du fil est comprise entre 17 et 25 m/min.

La présente invention va être maintenant mieux comprise grâce aux explications données dans les exemples suivants.

### Exemples

Afin de vérifier l'efficacité du procédé de soudage MAG de l'invention, on a réalisé une première série d'essais sur un assemblage en acier au carbone de type bord soyé de 4,5 mm d'épaisseur au total (mesurée au niveau du bord soyé).

Les différents paramètres de soudage mis en oeuvre lors des essais sont donnés dans le Tableau 1 suivant.

**Tableau 1 : Paramètres de soudage**

| | |
|---|---|
| Intensité de soudage | 280 à 324 A |
| Tension de soudage | 30 à 33 V |
| longueur de fil sorti (*stick out*) | 24 mm |
| Position de la torche (voir Fig. 3) | α = 60° à 70° β = 90° a de 40 à 56 mm |
| Vitesse du fil | 18 à 20 m/mn |
| Vitesse de soudage | 1 à 1,8 m/mn |
| Type de gaz | Ar + CO₂ (8% vol.) |
| Débit de gaz | 28 l / mn |
| Type de fil | STARMAG - G3 Si 1 (EN 44 |

Concernant la position de la torche illustrée en Figure 3, il convient de dire que la torche 5 de soudage est fixe et positionnée en décalage de l'axe vertical à une distance a comprise entre 40 et 56 mm environ. L'arc est amorcé par l'extrémité du fil fusible 6 de diamètre égal à 1 mm, la pièce (virole 1 et fonds 2 dans ce cas) est en rotation dans le sens des aiguilles d'une montre à une vitesse de l'ordre de 1, 5 m/mn environ. La soudure 4 s'effectue donc dans une position dite de semi descendante.

Il est à noter que l'on peut souder les deux extrémités de la virole 1 aux fonds 2, l'une après l'autre ou alors simultanément en utilisant deux torches de soudage fonctionnant concomitamment.

Des premiers résultats satisfaisants ont été obtenus dans ces conditions, à savoir une pénétration de soudage acceptable et un taux de dépôt élevé.

Toutefois, afin de tenter d'améliorer encore le procédé, on a comparé les effets de différentes compositions de gaz et, pour ce faire, on a testé les gaz ou mélanges gazeux donnés dans le Tableau 2 suivant dans les mêmes conditions opératoires que précédemment de manière à voir si le gaz pouvait avoir une influence sur l'aspect du cordon ou la pénétration de soudage.

**Tableau 2 : compositions gazeuses testées (en, % vol.)**

| Mélange gazeux n° | Argon | CO₂ | O₂ | He |
|---|---|---|---|---|
| A | 82% | 18% | - | - |
| B | 92% | 8% | - | - |
| C | 94% | 5% | 1% | - |
| D | 85% | 10% | - | 5% |
| E | 87% | - | 3% | 10% |

Après analyse des résultats obtenus, notamment après examen de l'aspect des cordons réalisés avec ces mélanges gazeux, la présence ou non de projections et la vitesse de soudage, il est apparu que le procédé de soudage MAG pouvait être notablement amélioré par utilisation d'un mélange gazeux de protection constitué de 3 composants, à savoir un mélange formé d'argon, d'hélium et d'oxygène dans des proportions particulières.

Ainsi, les meilleurs résultats ont été obtenus pour le mélange gazeux ternaire (mélange gzeux n°E) constitué (% en volume) de 10% d'hélium, 3% d'oxygène et d'argon pour le reste, c'est-à-dire jusqu'à 100% en volume.

En effet, l'oxygène présent dans le mélange gazeux, grâce à son pouvoir oxydant, favorise la stabilité de la racine d'arc. De plus, son taux d'oxydation étant deux fois supérieur au CO₂, il en résulte une forme de pénétration différente et plus adaptée au soudage des bords soyés.

Par ailleurs, l'hélium, qui est un gaz inerte à fort potentiel d'ionisation, favorise l'effet de mouillage et influe sur le profil du cordon sans nécessiter à une augmentation de l'intensité de soudage qui provoquerait inévitablement des défauts et une détérioration de la qualité du cordon obtenu, tels que des caniveaux ou similaires.

En fait, dans le cas présent, les propriétés de l'hélium se combinent vraisemblablement à celles de l'oxygène, ce qui permet de limiter la quantité d'oxygène dans le mélange gazeux. En effet, un mélange gazeux contenant trop d'oxygène serait trop oxydant et conduirait à une forte proportion de projections qui nécessiteraient des opérations de parachèvement post-soudage, donc une baisse de productivité et une augmentation des coûts. A l'inverse, une trop faible proportion d'oxygène ne permettrait pas d'obtenir une pénétration suffisante du fait d'un pouvoir oxydant trop faible. Il est donc souhaitable de limiter la proportion d'oxygène à 3% environ.

Plusieurs séries d'essais complémentaires visant à vérifier ces observations ont été réalisées. Ces essais ont consisté à souder par un procédé de soudage à l'arc de type MAG avec fil d'apport fusible, la virole, c'est-à-dire le corps cylindrique, d'un extincteur aux deux fonds de l'extincteur selon une configuration en bord soyé, telle que schématisée en Figures 1 et 4. La virole et les fonds sont en acier au carbone d'environ 3 mm d'épaisseur.

Le fil de soudage utilisé est un fil plein de diamètre 1 mm commercialisé sous la référence STARMAG, de type G3 Si 1 selon EN 440.

Le gaz de protection utilisé est le mélange ternaire n°E ci-dessus formé de 10% d'hélium, 3% d'oxygène et d'argon pour le reste (% en volume).

Les conditions opératoires sont : une tension de 33 V, une intensité de soudage de 300 A, une vitesse de fil de 20 m/min, une vitesse de soudage de 1,5 m/mn, un régime de soudage de type courant lisse, un *stick out* de 24 mm et une position de torche de type α = 68° et a = 48 mm (Fig. 3).

La Figure 2 est une photographie (vue en coupe) du cordon de soudage obtenu durant ces essais. On voit que le profil du cordon a un très bel aspect et une largeur suffisante pour répondre aux exigences normatives concernant la qualité du cordon et la pénétration de soudage.

En effet, le cordon obtenu présente un profil assez large pour bien recouvrir l'extérieur du joint, comme requis par les normes.

En outre, la pénétration de soudage est aussi satisfaisante au plan normatif puisque :
- le bord supérieur de l'assemblage, c'est-à-dire le bord d'extrémité de la virole, a été totalement fondu, ce qui répond donc aux contraintes normatives qui exigent que l'arrête inférieure de la virole soit fondue, et
- le bord inférieur de l'assemblage, c'est-à-dire le bord du fond a été également fondu sur une bonne partie de l'épaisseur.

En définitive, les essais opérés dans les conditions précédentes ont conduit à :
- une qualité optimale de l'aspect du cordon, une bonne pénétration de soudage, une excellente compacité de cordon, une absence de porosité, une largeur de cordon de soudure satisfaisante, une absence de projection,
- une vitesse de soudage de 1, 5 m/mn soit un gain sur le temps d'arc allumé de 60 % par rapport à des paramètres de soudage standard pour ces applications.

A noter que des essais comparatifs opérés avec des fils de soudage de diamètre 1,2 mm se sont révélés moins bons en termes de souplesse opératoire que les fils de diamètre 1 mm, bien que donnant des résultats similaires en termes de qualité et de pénétration. On préférera donc utiliser des fils de diamètre égal à environ 1 mm.

Dans tous ces essais, les tests de répétitivité se sont avérés parfaits avec le gaz ternaire constitué de 10% d'hélium, 3% d'oxygène et d'argon pour le reste (% en volume) selon la présente invention en comparaison des autres mélanges gazeux testés. Ce gaz est donc particulièrement recommandé pour une mise en oeuvre industrielle du procédé de l'invention.

Bien entendu, des mélanges gazeux contenant les mêmes constituants dans des proportions très légèrement différentes de celles données ci-avant conduisent à des résultats sensiblement similaires à ceux obtenus avec le mélange ternaire préféré selon l'invention et relèvent donc de la présente invention.

A noter, en outre, que ce mélange ternaire peut éventuellement comprendre des impuretés gazeuses inévitables, par exemple des traces de vapeur d'eau ou d'azote, résultant des processus de fabrication et conditionnement dudit mélange gazeux ; toutefois, ces impuretés gazeuses sont en proportions négligeables (de l'ordre de quelques ppm en volume, voire moins) et n'affectent pas le procédé de soudage de l'invention. De telles impuretés seront donc négligées.

En définitive, les essais réalisés ont mis en évidence qu'un soudage efficace des bords soyés des appareils sous pression peut être obtenu avec le mélange gazeux ternaire susmentionné lorsqu'il est mis en oeuvre dans un procédé de soudage MAG avec fil fusible, de préférence un fil plein de diamètre 1 mm. Les cordons de soudure ainsi obtenus présentent un profil répondant aux exigences normatives les plus strictes. Le procédé de l'invention permet, quant à lui, des gains de productivité et une baisse de coûts de production.

Le procédé de soudage de l'invention peut être mis en oeuvre indifféremment de façon manuelle, c'est-à-dire que la torche de soudage est tenue par un opérateur, ou de manière automatique ou robotique, c'est-à-dire que la torche de soudage est fixée sur une machine de soudage automatisée ou le bras d'un robot de soudage.

## Revendications

1. Procédé de soudage MAG à l'arc électrique mettant en oeuvre un fil d'apport (6) fusible et un gaz de protection, dans lequel :
a) on assemble au moins deux pièces métalliques (1, 2) l'une avec l'autre de manière à définir un joint à souder entre lesdites pièces métalliques (1, 2),
b) on opère à l'aide de l'arc électrique, une fusion du métal constitutif desdites pièces (1, 2) le long du joint à souder et simultanément une fusion progressive du fil d'apport et le dépôt, au niveau du joint, du métal fondu issu de la fusion du fil (6) de manière à obtenir, après refroidissement, un cordon (4) de soudage,
c) durant l'étape b), on opère une protection gazeuse du joint de soudure au moyen d'un gaz de protection,
**caractérisé en ce que** :
- à l'étape a), les pièces (1, 2) sont assemblées selon une configuration de type bord soyé, les pièces (1,2) étant en acier et ayant une épaisseur comprise entre 0,5 mm et 5 mm, et
- à l'étape b), le gaz de protection est constitué de 8 à 12 % d'hélium, de 2,5 à 3,5 % d'oxygène et d'argon pour le reste (% en volume).

2. Procédé selon la revendication 1, **caractérisé en ce que** le mélange gazeux contient plus de 9% d'hélium, de préférence plus de 9,5% d'hélium.

3. Procédé selon l'une des revendications précédentes, **caractérisé en ce qu'**il contient moins de 11% d'hélium, de préférence moins de 10,5% d'hélium.

4. Procédé selon l'une des revendications précédentes, **caractérisé en ce qu'**il contient plus de 2,7% d'oxygène, de préférence plus de 2,8% d'oxygène.

5. Procédé selon l'une des revendications précédentes, **caractérisé en ce qu'**il contient moins de 3,3% d'oxygène, de préférence moins de 3,2% d'oxygène.

6. Procédé selon l'une des revendications précédentes, **caractérisé en ce qu'**il contient entre 2,9% et 3,1% d'oxygène.

7. Procédé selon l'une des revendications précédentes, **caractérisé en ce qu'**il est constitué de 10% d'hélium, 3% d'oxygène et de 87% d'argon.

8. Procédé selon la revendication 1, **caractérisé en ce que** les bords des pièces (1, 2) formant la configuration de type bord soyé sont de forme circulaire.

9. Procédé selon la revendication 1, **caractérisé en ce que** le fil d'apport (6) fusible est un fil plein ayant un diamètre compris entre 0,8 et 1,2 mm, de préférence de l'ordre de 1mm.

10. Procédé selon la revendication 1, **caractérisé en ce que** l'une des pièces est une virole (1) et l'autre pièce est un fond (2) de virole, le fond (2) de virole venant s'insérer dans la virole (1) en configuration de type bord soyé.

11. Procédé la revendication 1, **caractérisé en ce que** l'une des pièces est un premier fond (2) et l'autre pièce est un second fond (2), le premier fond (2) venant s'insérer dans le second fond (2) en configuration de type bord soyé.

12. Procédé la revendication 1, **caractérisé en ce que** l'assemblage soudé obtenu est un ballon d'eau chaude, un extincteur, un compresseur, un appareil réfrigérant ou une bouteille de gaz de type GPL.

## Patentansprüche

1. Verfahren zum MAG-Lichtbogenschweißen unter Verwendung eines abschmelzenden Schweißdrahts (6) und eines Schutzgases, bei dem
a) mindestens zwei Metallteile (1, 2) derart zusammengefügt werden, dass eine zu schweißende Verbindungsstelle zwischen den Metallteilen (1, 2) festgelegt wird,
b) mit Hilfe des Lichtbogens eine Abschmelzung des Metalls, aus dem die Teile (1, 2) bestehen, entlang der zu schweißenden Verbindungsstelle und gleichzeitig eine progressive Abschmelzung des Schweißdrahtes und die Aufbringung, im Bereich der Verbindungsstelle, des aus der Abschmelzung des Drahtes (6) hervorgegangenen abgeschmolzenen Metalls erfolgt, derart, dass, nach Abkühlung, eine Schweißnaht (4) erhalten wird,
c) während des Schrittes b) ein gasförmiger Schutz der Schweißverbindungsstelle mit Hilfe eines Schutzgases erfolgt,
**dadurch gekennzeichnet, dass**
- in Schritt a) die Teile (1, 2) gemäß einer Ausgestaltung des Typs durchgezogener Rand zusammengefügt werden,
wobei die Teile (1, 2) aus Stahl sind und eine Dicke zwischen 0,5 mm und 5 mm haben,
und
- in Schritt b) das Schutzgas aus 8 bis 12 % Helium, aus 2,5 bis 3,5 % Sauerstoff und Argon, was den Rest betrifft, besteht (Volumenprozent).

2. Verfahren nach Anspruch 1, **dadurch gekennzeichnet, dass** das gasförmige Gemisch mehr als 9 % Helium, vorzugsweise mehr als 9,5 % Helium enthält.

3. Verfahren nach einem der vorhergehenden Ansprüche, **dadurch gekennzeichnet, dass** es weniger als 11 % Helium, vorzugsweise weniger als 10,5 % Helium enthält.

4. Verfahren nach einem der vorhergehenden Ansprüche, **dadurch gekennzeichnet, dass** es mehr als 2,7 % Sauerstoff, vorzugsweise mehr als 2,8 % Sauerstoff enthält.

5. Verfahren nach einem der vorhergehenden Ansprüche, **dadurch gekennzeichnet, dass** es weniger als 3,3 % Sauerstoff, vorzugsweise weniger als 3,2 % Sauerstoff enthält.

6. Verfahren nach einem der vorhergehenden Ansprüche, **dadurch gekennzeichnet, dass** es zwischen 2,9 % und 3,1 % Sauerstoff enthält.

7. Verfahren nach einem der vorhergehenden Ansprüche, **dadurch gekennzeichnet, dass** es aus 10 % Helium, 3 % Sauerstoff und 87 % Argon besteht.

8. Verfahren nach Anspruch 1, **dadurch gekennzeichnet, dass** die Ränder der Teile (1, 2), welche die Ausgestaltung des Typs durchgezogener Rand bilden, kreisförmig sind.

9. Verfahren nach Anspruch 1, **dadurch gekennzeichnet, dass** der abschmelzbare Schweißdraht (6) ein massiver Draht ist, der einen Durchmesser zwischen 0,8 und 1,2 mm, vorzugsweise in der Größenordnung von 1 mm hat.

10. Verfahren nach Anspruch 1, **dadurch gekennzeichnet, dass** eines der Teile ein Mantelschuss (1) ist und das andere Teil ein Mantelschussboden (2) ist, wobei der Mantelschussboden (2) in den Mantelschuss (1) in der Ausgestaltung des Typs durchgezogener Rand eintritt.

11. Verfahren nach Anspruch 1, **dadurch gekennzeichnet, dass** eines der Teile ein erster Boden (2) ist und das andere Teil ein zweiter Boden (2) ist, wobei der erste Boden (2) in den zweiten Boden (2) in der Ausgestaltung des Typs durchgezogener Rand eintritt.

12. Verfahren nach Anspruch 1, **dadurch gekennzeichnet, dass** die erhaltene geschweißte Verbindung ein Warmwasserbehälter, ein Feuerlöscher, ein Kompressor, ein Kühlgerät oder eine Flasche für Gas des Typs Flüssiggas ist.

## Claims

1. MAG electric arc welding method using a consumable filler wire (6) and a shielding gas, wherein:
a) at least two metal parts (1, 2) are joined to one another so as to define a weldable joint between said metal parts (1, 2),
b) using the electric arc, the metal that constitutes the parts (1, 2) is melted along the joint to be welded and at the same time the filler wire is progressively melted and the molten metal resulting from the melting of the wire (6) is deposited at the joint so that, after cooling, a weld bead (4) is obtained,
c) during step b), gas shielding of the weld joint is carried out using a shielding gas,
**characterised in that**:
- in step a), the parts (1, 2) are assembled in a joggled-edge-type configuration, the parts (1, 2) being made of steel and having a thickness of between 0.5 mm and 5 mm, and
- in step b), the shielding gas comprises 8 to 12 % helium, 2.5 to 3.5 % oxygen, and the remainder (% by volume) is argon.

2. Method according to claim 1, **characterised in that** the gas mixture contains more than 9 % helium, preferably more than 9.5 % helium.

3. Method according to any of the preceding claims, **characterised in that** said mixture contains less than 11 % helium, preferably less than 10.5 % helium.

4. Method according to any of the preceding claims, **characterised in that** said mixture contains more than 2.7 % oxygen, preferably more than 2.8 % oxygen.

5. Method according to any of the preceding claims, **characterised in that** said mixture contains less than 3.3 % oxygen, preferably less than 3.2 % oxygen.

6. Method according to any of the preceding claims, **characterised in that** said mixture contains between 2.9 % and 3.1 % oxygen.

7. Method according to any of the preceding claims, **characterised in that** said mixture comprises 10 % helium, 3 % oxygen and 87 % argon.

8. Method according to claim 1, **characterised in that** the edges of the parts (1, 2) forming the joggled-edge-type configuration are circular.

9. Method according to claim 1, **characterised in that** the consumable filler wire (6) is a solid wire having a diameter of between 0.8 and 1.2 mm, preferably of approximately 1 mm.

10. Method according to claim 1, **characterised in that** one of the parts is an annular portion (1) and the other part is a base (2) of the annular portion, the base (2) of the annular portion being inserted into the ring (1) in a joggled-edge-type configuration.

11. Method according to claim 1, **characterised in that** one of the parts is a first base (2) and the other part is a second base (2), the first base (2) being inserted into the second base (2) in a joggled-edge-type configuration.

12. Method according to claim 1, **characterised in that** the welded assembly obtained is a hot water tank, a fire extinguisher, a compressor, a cooling apparatus or an LPG-type gas cylinder.
